(19) **Europäisches Patentamt**

**European Patent Office**

**Office européen des brevets**

(11) **EP 1 078 685 A2**

(12) **EUROPEAN PATENT APPLICATION**

(43) Date of publication:
28.02.2001 Bulletin 2001/09

(51) Int. Cl.7: **B01J 20/18**, C01B 21/04,
B01D 53/04, B01D 53/047

(21) Application number: 00118301.1

(22) Date of filing: 23.08.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 25.08.1999 US 382601

(71) Applicant:
**PRAXAIR TECHNOLOGY, INC.**
**Danbury, CT 06810-5113 (US)**

(72) Inventor: **Guliants, Vadim**
**Cincinnati, OH 45230 (US)**

(74) Representative:
**Schwan, Ivo, Dipl.-Ing. (FH) et al**
**Schwan-Schwan-Schorer,**
**Elfenstrasse 32**
**81739 München (DE)**

(54) **Novel adsorbents for preferential nitrogen adsorption from other gases**

(57) Novel BEA, BOG, CAN, EVO, FER, GME, LTL, MAS, MEI, MEL, MFI, MFS, MOR, MTT, MTW, NES, OFF, STI, TON, VET framework adsorbents and mixtures thereof containing about 0% to 100% monovalent cations and about 0% to 100% divalent cations for preferential adsorption of nitrogen from gas mixtures, especially in a pressure swing adsorption process.

EP 1 078 685 A2

## Description

Field of the Invention

This invention relates to novel microporous adsorbents such as zeolites and silica aluminophosphates, their preparation, and their use in preferentially separating nitrogen gas from gas mixtures containing nitrogen and other gases. More particularly, this invention relates to novel adsorbents for preferentially separating nitrogen from other having essentially only mono and/or divalent cations as the ion-exchangeable. In particular, this invention relates to novel adsorbents for preferentially separating nitrogen from other gases in which the adsorbents are lithium cation-containing adsorbents having essentially only lithium as the exchangeable cation or lithium with essentially only other mono- and/or divalent cations. In particular, this invention relates to novel adsorbents for preferentially separating nitrogen from other gases in which the adsorbents are divalent cation-containing adsorbents having essentially only divalent cations as the exchangeable CATIONS. The novel adsorbents have improved thermal stability, especially hydrothermal stability, and improved nitrogen selectively resulting in high nitrogen separation efficiency.

Background of the Invention

When desiring to separate nitrogen from other gases, such as oxygen, argon and the like, on a large industrial scale, fractional distillation is most commonly employed. However, this fractional distillation process is quite capital intensive and is being increasingly displaced by new separation methods, most notably by adsorption processes for relatively smaller scale industrial applications. For example, pressure swing adsorption (PSA), has been employed as an alternative to fractional distillation gas separation process. Because of their high adsorption capacity and generally high selectivity, zeolites have generally been employed as the preferred adsorbents in these adsorbent processes.

These desirable adsorption and selectivity properties are due, at least in part, to the microporous nature of the zeolite structures, in which a large number of pores of a consistent size extend throughout the lattice framework of the zeolite and bare cations occupy well-defined and consistent positions in the pores.

For example, US Patent 2,882,243 to Milton describes the use of zeolite A having a silica/alumina ratio of 1.85±0.5 and containing hydrogen, ammonium, alkali metal, alkaline earth metal or transition metal cations as an adsorbent for separating nitrogen and oxygen.

US Patent 3,140,933 to McKee describes the use of X zeolites which have been ion-exchanged with alkali metal or alkaline earth metals as adsorbents for separating nitrogen and oxygen. Since the ion-exchange was not exhaustive and the X zeolites were synthesized using sodium as the templating agent, the partially ion-exchanged materials used were in fact mixed sodium/alkali metal or /alkaline earth metal zeolites. According to US Patent 3,140,933, nitrogen adsorption improves when some of the sodium cations are replaced with lithium cations and according to US Patent 4,859,217, A highly lithium exchanged form of zeolite X improves nitrogen separation from gas streams with less polar substances such as hydrogen, argon and methane.

However, lithium-exchanged adsorbents have very high affinity for water, which when adsorbed, significantly lowers the adsorption capacity of the zeolite. Unfortunately, lithium-exchanged zeolites have poor hydrothermal stability and cannot be readily dehydrated on a commercial scale without undergoing a significant amount of cation hydrolysis leading to a loss of zeolite content and an inferior air separation adsorbent.

US Patent 4,925,460 discloses a process for separating a gas mixture comprising components with different heats of adsorption, such as nitrogen from air, employing lithium-exchanged chabazite having a Si/Al ratio from about 2.1 to 2.8 and at least 65% of the exchangeable cation capacity in the Li form.

US Patent 5,562,756 discloses a crystalline EMT structure with a Si/Al ratio less than 2.0 and a lithium cation exchange of at least 80%, the remaining cation being selected from the group consisting of calcium, magnesium, zinc, nickel, manganese, sodium, potassium and mixtures thereof, preferably including an intergrowth with a crystalline FAU structure, where an EMT structure content is between 5 and 100%, for selectively adsorptively separating nitrogen from oxygen.

Unfortunately, water molecules have high affinity for adsorption on zeolites. Therefore, in order to achieve optimiun adsorption performance it is necessary to dehydrate the zeolite at high temperatures, since adsorbed water even in small amounts significantly diminishes adsorption capacity of the zeolite. Specifically, zeolites lithium A and X displaying good nitrogen capacity and nitrogen/oxygen selectivity may be suitable as oxygen PSA adsorbents. Their use in oxygen PSA separations is described and claimed in US Patent 5,413,625. These zeolites have sufficient thermal stability to permit their dehydration, provided the dehydration temperature is carefull controlled. However, under industrial conditions it is often difficult and expensive to maintain precise control over dehydration of large quantities of the zeolite. It is therefore desirable to use an adsorbent which affords the required degree of dehydration at a temperature sufficiently below the temperature of the crystal structure collapse.

US Patent 5,616,170 and European patent application EP 0 758561 Al disclose chabazite, offretite, erionite, levyne, mordenite, gmelinite, zeolite A, zeolite T, EMC-2, ZSM-3, ZSM-18, ZK-5, zeolite L, and beta whose exchangeable cations are composed, on an equivalents tons basis, of 95 to 50% lithium cations, 4 to 50% of one or more trivalent ions of aluminum, cerium, lanthanum, and mixed lanthanides and 0 to 15% of other cations as preferentially adsorbing nitrogen from gas mixtures.

However, a need still exists for adsorbents having improved nitrogen selectivity, hydrothermal stability, having less affinity for water and that can be prepared at a lower cost of manufacture. The adsorbents of this invention provide one or more of these desired characteristics.

Brief Summary of the Invention

Novel adsorbents are provided by this invention which are usable in separation of nitrogen from gas mixtures and are characterized by one or more of the following characteristics, namely improved nitrogen selectivity, hydrothermal stability, lowered affinity for water and a lowered cost of production. These novel adsorbents are especially useful in separating nitrogen from gas mixtures by PSA and/or TSA processes. The adsorbents of this invention are preferably BEA, BOG, CAN, EUO, FER, GME, LTL, MAZ, MEI, MEL, MFI, MFS, MOR, MTT, MTW, NES, OFF, STI, TON, VET frameworks and mixtures thereof wherein said adsorbents have as exchangeable cations, on an equivalent basis, from about 0% to about 100% monovalent cations from about 0 to about 100% divalent cations, and mixtures thereof (the total of monovalent and/or divalent cations being 100%). In particular, the said adsorbents have as exchangeable cations, on an equivalent basis, from about 0% to about 100% lithium cations, from about 0 to about 100% other monovalent cations, and from about 0 to about 100% divalent cations, and mixtures thereof. More specifically preferred, the said adsorbents have as exchangeable cations, on an equivalent basis, from about 10% to about 99% lithium cations, and the remaining exchangeable cations being substantially only mono or divalent cations. Generally, the lithium cation-containing adsorbents will have from about 10% to about 99% lithium, from about 1% to about 90% divalent cations and from about 0% to about 90%, preferably about 1% to about 90%, other monovalent cations. In particular, the said adsorbents have as exchangeable cations, on an equivalent basis, from about 0% to about 100%, preferably about 95 to about 99% divalent cations.

Brief Description of the Drawings

Fig. 1 shows the nitrogen single component isotherms of adsorption on 5A, 13X and Li-mordenite of Example 1 measured according to the process of Example 2.
Fig. 2 shows the oxygen single component isotherms of adsorption on 5A, 13X and Li-mordenite of Example 1 measured according to the process of Example 2.

Detailed Description of the Preferred Embodiments

Based on molecular modeling and sorption property information of novel adsorbent structures it has been discovered that novel tetrahedral framework adsorbents selected from BEA, BOG, CAN, EUO, FER, GME, LTL, MAZ, MEI, MEL, MFI, MFS, MOR, MTT, MTW, NES, OFF, STI, TON, VET frameworks and mixtures thereof in which the adsorbents have from about 0% to about 100% monovalent cations and from about 0 to about 100% divalent cations, and mixtures thereof are especially suitable for selective separation of nitrogen from gas mixtures.

In accordance with this invention the monovalent and/or divalent cation-containing adsorbents are characterized by excellent nitrogen adsorption and selectivity, thermal stability, and a reasonable cost of production.

While the molecular sieve frameworks may be any of those previously listed, it is preferred that the framework be selected from BOG, CAN, EUO, FER, MAZ, MEL, MFI, MFS, MTT, MTW, NES, STI, TON, VET and mixtures thereof. The three letter codes identifying the tetrahedral frameworks are structure type codes assigned by the International Zeolite Association in accordance with rules set up by the IUPAC Commission on Zeolite Nomenclature and as set forth in Atlas of Zeolite Structure Types, W.M. Meier et al., 4th Revised Edition, 1996.

The divalent cations in the novel adsorbents of this invention are selected from alkaline earth metal cations, zinc, iron, nickel, manganese, copper (II), cadmium, and mixtures thereof. The monovalent cations in the novel adsorbents of this invention are selected from alkali metal cations, hydronium, copper (I), silver, thalium, and mixtures thereof.

Generally, the adsorbents of the present invention have from about 0 to about 100% of monovalent cations, and from about 0 to about 100% of divalent cations as the exchangeable cations on an equivalents basis. In particular, the adsorbents of the present invention have from about 0 to about 100% of lithium cations, and from about 0 to about 100% of divalent and other monovalent cations. Generally, the minimum preferred percentage of lithium in pure lithium-cation exchanged adsorbents of this invention, on an equivalents basis, is 95% and preferably 98% or 99%. The residual exchangeable cations will generally be the alkali metal cations, alkaline earth metal cations, hydronium, and mixtures thereof. Generally, the minimum percentage of lithium in lithium/monovalent cation exchanged adsorbents, on an equivalents basis, is 10% and preferably 95%. Generally, the minimum percentage of lithium in lithium/divalent cation exchanged adsorbents, on an equivalents basis, is 10% and preferably 80%. Generally, the minimum percentage of lithium in lithium/mono- and divalent cation exchanged adsorbents on an equivalents basis is 10% and preferably 85%. Generally, the minimum preferred percentage of divalent cations in pure divalent-cation exchanged adsorbents of this invention, on an equivalents basis, is 95% and preferably 98% or 99%.

Pore size is also an important selection criterion is important for two major reasons. On the one hand, the pores should be large enough to allow adsorption of diatomic molecules, such as nitrogen and oxygen, i.e. the pores should be larger than 3.6 Å. On the other hand, our molecular modeling of nitrogen adsorption indicates that nitrogen molecules adsorb at the exposed cations in the end-on geometry or radially with respect to the direction of a straight cylindrical pore. Such geometry is believed to be optimal for nitrogen physisorption and the $N_2/O_2$ separation selectivity. When these adsorption sites were associated with exposed Li cations, the minimum pore size required for the favorable end-on orientation of adsorbed nitrogen molecules was 4.2 Å. In light of the above, a preferred minimum pore size for the $N_2$-selective adsorbents of the invention is about 4.2 Å.

An additional criteria for determining the preferred adsorbents of the invention is negative charge density of the framework. In particular, this charge density defines the nonframework cation content which in turn governs nitrogen adsorption and $N_2/O_2$ selectivity. For the invention, a minimum negative charge density per T-site of -0.11 units of negative charge at any framework composition is preferred.

This invention also provides a process for preparing such novel adsorbents, which comprises:

ion-exchanging an adsorbent from the group comprising BEA (beta), BOG, CAN, EUO, FER, GME, LTL, MAZ, MEI, MEL, MFI, MFS, MOR, MTT, MTW, NES, OFF, STI, TON, VET frameworks and mixtures thereof in one monovalent cation-exchanged form with a solution of another desired monovalent cation salt until a desired level of this latter monovalent cation exchange is achieved; and thereafter, if necessary, ion-exchanging the monovalent cation-exchanged adsorbent thus produced with a solution of a mono- and/or divalent cation salt until a sufficient proportion of the monovalent cations have been replaced with a mono- and/or divalent cations to provide a mono- and divalent cation equivalent ratio within the specified range.

More particularly, this invention also provides a process for preparing such novel adsorbents, which comprises ion-exchanging an adsorbent of the present invention in a form having alkali metal cations other than lithium, with a solution of a lithium salt until a desired level of lithium exchange is achieved; and thereafter, if necessary, ion-exchanging the lithium adsorbent thus produced with a solution of a mono- or divalent cation salt until a sufficient proportion of the lithium cations have been replaced with a mono- or divalent cations to provide a lithium/mono- and divalent cation equivalent ratio within the specified range.

The order of ion exchange is not important. The preferred method for preparing the adsorbents of the present invention is to ion-exchange base adsorbents in the sodium or ammonium forms with a solution of a lithium salt until no further lithium can be introduced into the adsorbent, and then to ion-exchange the lithium form of the adsorbents thus produced with a solution of the appropriate mono- and/or divalent cation salt until the desired $Li^+/(Li^++M^++M^{2+})$ ratio is achieved. Pure divalent cation forms, such as the Ca form, can be prepared by directly ion-exchanging base adsorbents in the sodium or ammonium form forms with a solution of a divalent cation salt until no further divalent cation can be introduced into the adsorbent. Techniques for the ion-exchange of adsorbents are well-known to those skilled in this art, and hence will not be described in detail herein. In some cases it may be necessary to separate, dry and thermally activate the partially ion-exchanged adsorbent at 150-600°C, and preferably at 300-500°C under controlled conditions in order to minimize the steaming damage of the adsorbent, and then perform final stages of the ion exchange. Otherwise, the base adsorbent can be ion-exchanged first with one or more of the specified mono- and/or divalent cations to a desired level, followed by the lithium exchange to a specified level. Alternatively, the base adsorbent may be simultaneously exchanged with lithium cations and one or more of the specified mono- and/or divalent cations. In some cases it may be necessary to calcine the as-synthesized adsorbents prior to ion-exchange steps in order to remove organic template which was used to crystallize the adsorbent phases. The template removal is well-known to those skilled in this art, and hence will not be described in detail herein. After a template is removed, partially or completely hydrogen-exchanged form (H-form) of the adsorbents of the present invention may be titrated with a solution containing desired mono- and/or divalent cations either in water or in a polar aproptic solvent to effect the desired mono- and/or divalent cation exchange. Following the titration of the H-form of adsorbents, the exchangeable cations other than protons are replaced by a conventional ion exchange in an aqueous medium.

In one embodiment of the invention, about 0 to 100% of the exchangeable cations are monovalent ions, and about 0 to about 100% of the cations are divalent ions. The preferred adsorbents of the invention have as exchangeable cations on an equivalents basis from about 0 to about 100% lithium, from about 0 to about 100% divalent cations, and from about 0 to about 100% of other monovalent cations. In some cases divalent and/or other monovalent cations in the lithium cation-containing adsorbents may be residual as a result of the procedure employed to manufacture the adsorbents of the invention. Generally, the residual ions in the lithium-containing adsorbents may be sodium, potassium, rubidium, cesium, ammonium, hydronium, magnesium, calcium, strontium, barium, zinc, and copper. In some cases it is desirable to use divalent cations as part or all of the residual exchangeable cations, since divalent cation-exchanged adsorbents have better thermal stability characteristics than pure lithium forms of the adsorbents. Divalent cation-exchanged adsorbents also have superior nitrogen adsorption characteristics than do the sodium, ammonium and potassium forms of adsorbents. The preferred adsorbents of the invention have less than 20% of divalent cations on an equivalents basis. In some cases it may not be feasible to exchange part or all of the cations in a given adsorbent structure with mono-and/or divalent cations. In such cases these nonexchangeable cations are located in screened sites and cannot interact with gas molecules.

The adsorbents of the present invention can have a variety of physical forms, and the exact physical form of the product may affect its utility in nitrogen gas separation processes. When the adsorbents of the present invention are to be used in industrial adsorbers, it may be preferred to aggregate, e.g. pelletize, the adsorbent to control the macropore diffusion, or else in an industrial size adsorption column pulvirulent adsorbent may compact, thereby blocking, or at least significantly reducing flow through, the column. Those skilled in adsorbent technology are aware of conventional techniques for aggregating adsorbents in powder form; such techniques usually involve mixing the adsorbent with a binder, which is typically a clay, forming mixture into an aggregate, typically by extrusion or bead formation, and heating the formed adsorbent/binder mixture to a temperature of about 600-700°C to convert the green aggregate into one which is resistant to crushing.

The binders used to aggregate the adsorbents may include clays, silicas, aluminas, metal oxides and mixtures thereof. In addition, the adsorbents may be formed with materials such as silica, alumina, silica-alumina, silica-magnesia, silica-zirconia, silica-thoria, silica-berylia, and silica-titania, as well as ternary compositions, such as silica-alumina-thoria, silica-alumina-zirconia and clays present as binders. The relative proportions of the above materials and the active adsorbents may vary widely with the adsorbent content ranging between about 1 and about 99 percent by weight of the composite. Where the adsorbent is to be formed into aggregates prior to use, such aggregates are desirably about 1 to about 4mm in diameter.

Aggregation may be affected before or after the lithium and other metal cation exchanges required to produce the adsorbents of the present invention, e.g., one can first produce the mono- and/or divalent cation-exchanged adsorbents and then effect aggregation, or one can use as the starting material for the ion-exchanges the adsorbent which is already in aggregate form. More specifically, the latter is preferred in the case of lithium-containing adsorbents, In general, the latter is preferred, since the sodium forms of base adsorbents in the sodium form are usually more thermally stable than the lithium /mono- and/or divalent cation-exchanged adsorbents of the present invention and hence less susceptible to damage from the high temperatures used in the aggregation process. However, it should be noted that activation of the lithium/mono- and/or divalent cation-exchanged adsorbents is required even if the sodium-form of the adsorbent used as starting material has been activated during the aggregation process.

Adsorbents of the present invention can be used in any of the conventional types of nitrogen gas separation processes, particularly PSA and TSA, preferably PSA processes, and the conditions used in the processes of the invention will in general be the same as those used in prior art processes. Thus, in a PSA separation process of the present invention, the first, adsorption pressure will typically be in the range of from about 35 to about 65 psia, while the second, desorption pressure will typically be in the range of from 3.7 to about 16.7 psia. The temperature at which the process is conducted is limited only by the decline in adsorption capacity with increasing temperature which the present adsorbents share with all other adsorbents. Typically, the process will be conducted at a temperature in the range of about -15°C to about +60°C.

This invention particularly provides a PSA process for separating nitrogen from a feed gas containing nitrogen and oxygen, which process comprises:

contacting a gaseous feed mixture of nitrogen and oxygen with an adsorbent of this invention under a first pressure, thereby causing nitrogen to be selectively adsorbed into an adsorbent, and producing a gaseous first product mixture containing a greater proportion of oxygen than the feed mixture;
separating the first product mixture from the adsorbent; and
reducing the pressure on the adsorbent to a second pressure lower than the first pressure, thereby causing desorption from the adsorbent of a gaseous second product mixture containing a greater proportion of nitrogen than the feed mixture.

When the nitrogen gas separation process of this invention is a PSA process conducted at a temperature of from about -15° to about 70°C, the adsorption step is generally carried out at an absolute pressure in the range of from about 35 to about 65 psia and adsorbent is regenerated at an absolute pressure in the range of about 3.7 to about 16.7 psia. When the nitrogen separation process of the invention is a TSA process the adsorption step is generally carried out at a temperature within the range of about -20°C to about 50°C and adsorbent is regenerated at a temperature within the range of about 0°C to about 350°C.

The following Examples are given, though by way of illustration only, to show preferred adsorbents of the present invention, and processes for their preparation.

EXAMPLES

EXAMPLE 1: Preparation of lithium-exchanged adsorbents

Zeolite mordenite (MOR, Zeolon-100, Na-form, large port) with Si/Al ratio of 5.0 was obtained from Norton Company. Lithium ion exchanges were conducted at 90°C for 20 h on the zeolite Na-mordenite, using six static exchanges with 2M lithium chloride solution adjusted to pH of 9.3 with LiOH, each containing six-fold excess of lithium ions over the quantity of the base cations present in zeolite mordenite. The final lithium-exchanged sample was washed with a large volume of deionized water which pH was adjusted to 9.3 with LiOH, and dried in an oven at 110°C. The elemental analysis indicated complete lithium exchange.

EXAMPLE 2: Sorption properties of adsorbents of present invention

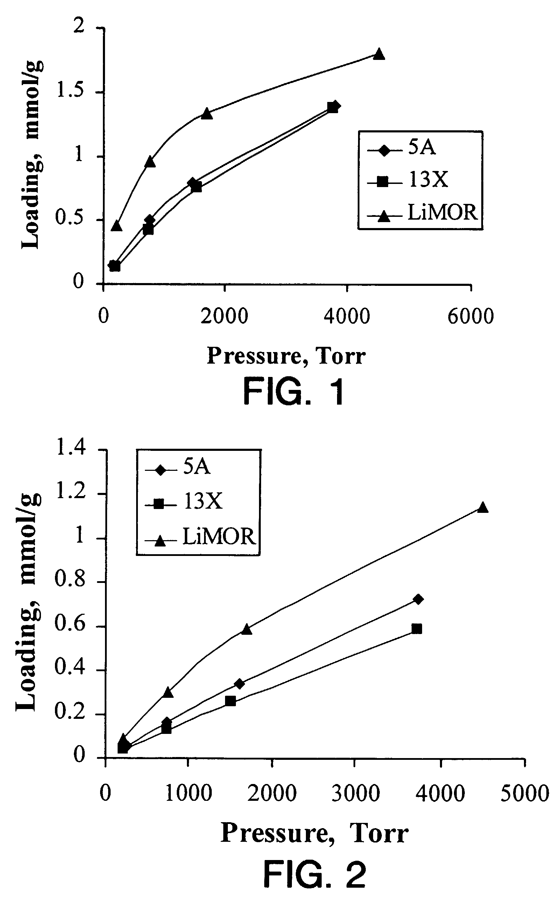

Adsorption isotherms for nitrogen and oxygen on lithium-exchanged adsorbent of Example 1 were measured gravimetrically using a Sartorius microbalance enclosed in a stainless steel vacuum/pressure system in the range 200-4500 Torr. About 100 mg of the sample was carefully evacuated and its temperature increased in 30°C steps after the sample reached constant weight at each intermediate temperature. The sample was kept at the final activation temperature of 350°C for 12 h, then cooled down to 26°C for the adsorption isotherms measurement. The adsorption isotherms and selectivities for nitrogen and oxygen on zeolite of Example 1 are shown in FIG. 1-2 and TABLE 1. Adsorption isotherms for nitrogen and oxygen on current commercial zeolites 5A and 13X are also shown for comparison. The adsorption isotherms were fitted to 3 parameter LRC isotherm model. The binary adsorption isotherms were calculated by applying mixing rules to the LRC fits to pure gas isotherms at 26°C. Difference in nitrogen capacity at 1125 and 263 Torr representing high and low pressures in a PSA cycle, and gas phase compositions of 78% nitrogen/22% oxygen and 95% nitrogen and 5% oxygen, respectively, provides a good indication of a PSA process operated between such high and low pressures (TABLE 1). The selectivities to nitrogen over oxygen at 26°C, 263 Torr and a gas phase composition of 5% oxygen and 95% nitrogen shown in TABLE 1 are given by:

$$S = (X_{N2}/Y_{N2})/(X_{O2}/Y_{O2})$$

where $X_{N2}$ and $X_{02}$ are the mole fractions of nitrogen and oxygen, respectively, in the adsorbed phase, and $Y_{N2}$ and $Y_{02}$ are the mole fractions of nitrogen and oxygen, respectively, in the gas phase.

TABLE 1

| Sorption data for adsorbents of this invention and commercial 5A and 13X zeolites | | |
|---|---|---|
| Sample | Difference in Nitrogen capacity, mmol/g | $N_2/O_2$ Selectivity at 263 Torr |
| Li-mordenite | 0.48 | 5.86 |
| 5A | 0.34 | 3.04 |
| 13X | 0.3 | 2.87 |

Evidence of the superior thermal stability of the adsorbents in this invention is provided in Table 2. Donald W. Breck published the thermal stability data for various cation forms of dehydrated zeolites in air *(Zeolite Molecular Sieves*, Krieger Publishing Co., Malabar, FL, 1974, p. 495). His data report the lowest observable temperature at which zeolite structure would deteriorate determined by X-ray diffraction. Breck's data were used to estimate the ranges of thermal stability of new zeolites of the present invention.

TABLE 2

| Thermal stability data for adsorbents of this invention and commercial 5A and 13X zeolites | | |
|---|---|---|
| Sample | Composition | Temperature of Incipient Decomposition by XRD, °C |
| Li-mordenite | 100 eq. % Li, Si/Al=5 | >700 |
| 5A | 96% Ca | 540 |
| 13X | 100% Na | 660 |

With the foregoing description of the invention, those skilled in the art will appreciate that modifications may be made to the invention without departing from the spirit thereof. Therefore, it is not intended that the scope of the invention be limited to the specific embodiments illustrated and described.

**Claims**

1. An adsorbent having a structure selected from the group consisting of BOG, EUO, FER, GME, MAZ, MEI, MEL, MFI, MFS, MOR, MTT, MTW, NES, OFF, STI, TON, VET frameworks and mixtures thereof, said adsorbent having exchangeable cations comprising, on an equivalents basis, from about 0% to about 100% monovalent cations, from about 0% to about 100% divalent cations, and mixtures thereof, said adsorbent having a minimum negative charge density per T-site of -0.11 units of negative charge.

2. The adsorbent of claim 1, wherein the monovalent cation includes lithium.

3. The adsorbent of claim 2, wherein the adsorbent contains from about 10% to about 99% lithium, and up to 90% of divalent and other monovalent cations.

4. The adsorbent according to Claim 3 wherein the exchangeable cations other than lithium comprise from about 1% to about 90% divalent cations and from about 1% to about 90% monovalent cations.

5. The adsorbent according to Claim 3 wherein the divalent cations are selected from the group consisting of alkaline earth metal cations, zinc, iron, nickel, manganese, copper (II), cadmium, and mixtures thereof and the monovalent cations are selected from the group consisting of alkali metal cations, hydronium, copper (I), thalium and mixtures thereof.

6. The adsorbent according to Claim 1 wherein the exchangeable cations consist substantially of lithium and divalent cations.

7. The adsorbent according to Claim 1 wherein the adsorbent is selected from BOG, EUO, FER, MAZ, MEL, MFI, MFS, MTT, MTW, NES, STI, TON, VET frameworks and mixtures thereof.

8. The adsorbent of claim 1, wherein the pore size of the adsorbent is at least 4.2A.

9. In a process for separating nitrogen gas from a gas mixture in which the gas mixture is contacted with an adsorbent to preferentially adsorb nitrogen gas from the gas mixture, the improvement comprising contacting the gas mixture with the adsorbent of Claim 1.

10. In a process for separating nitrogen gas from oxygen gas in which a feed gas mixture containing nitrogen and oxygen gases is contacted with an adsorbent under a first pressure causing nitrogen to be selectively adsorbed into the adsorbent and producing a first gas product separated from the gas mixture, said first gas produced being enriched in oxygen gas, and then reducing the pressure on the adsorbent to a second pressure lower than the first pressure causing desorption from the adsorbent of a second gas mixture enriched in nitrogen gas from the teed gas mixture, the improvement comprising utilizing the adsorbent of any one of claims 1 to 8 as the adsorbent.

FIG. 1

FIG. 2